# FASCICULE DE BREVET EUROPEEN

(11) **EP 1 141 164 B1**
(45) Date de publication et mention de la délivrance du brevet: **04.08.2004**
(21) Numéro de dépôt: 99958318.0
(22) Date de dépôt: 14.12.1999
(51) Int. Cl.: C09K 3/10, B65D 83/14

(54) **JOINT DE VALVE OU DE POMPE**
DICHTUNG FÜR EIN VENTIL ODER EINE PUMPE
VALVE OR PUMP JOINT

(30) Priorité: 18.12.1998 FR 9816040
(43) Date de publication de la demande: 10.10.2001
(73) Titulaire: VALOIS S.A.S., 27110 Le Neubourg (FR)
(72) Inventeur: LEONE, Patrice, F-27400 Acquigny (FR)
(74) Mandataire: CAPRI
(86) Numéro de dépôt international: PCT/FR1999/003126
(87) Numéro de publication internationale: WO 2000/037582

(56) Documents cités:
- EP-A- 0 655 552
- WO-A-98/32669
- GB-A- 2 323 597
- US-A- 5 290 539
- US-A- 5 559 169
- CHEMICAL ABSTRACTS, vol. 119, no. 22, 29 novembre 1993 (1993-11-29) Columbus, Ohio, US; abstract no. 228198, NAKABAYASHI NOBUO: "liquid sealing compositins" XP002112495 -& PATENT ABSTRACTS OF JAPAN vol. 17, no. 551 (C-1117), 5 octobre 1993 (1993-10-05) & JP 0005 156087 A (KUREHA RUBBER) -& DATABASE WPI Week 9329 Derwent Publications Ltd., London, GB; AN 93-232491 XP002112496 & JP 05 156087 A (KUREHA GUM)
- DATABASE WPI Section Ch, Week 9819 Derwent Publications Ltd., London, GB; Class A12, AN 98-212916 XP002112497 & JP 10 060198 A (KUREHA GUM KOGYO KK), 3 mars 1998 (1998-03-03)

## Description

La présente invention concerne un joint de valve ou de pompe pour réaliser l'étanchéité d'un dispositif de distribution de produit fluide comportant une valve ou une pompe montée sur un réservoir de produit.

Plus particulièrement, les joints de l'invention sont adaptés à être utilisés d'une part dans des dispositifs de distribution de produit fluide sous pression comportant une valve, notamment une valve doseuse, et d'autre part dans les dispositifs de distribution de produit fluide non pressurisés comportant une pompe.

Les joints utilisés dans le cadre de dispositifs de distribution de produit fluide sous pression, tels que des dispositifs aérosols, doivent satisfaire un certain nombre de conditions et remplir certaines exigences. Ainsi, ces joints doivent fournir de bonnes propriétés mécaniques, assurer une bonne résistance à l'humidité et garantir des faibles gonflements lorsqu'ils sont en contact avec les propulseurs. Ces caractéristiques sont notamment particulièrement importantes pour les joints dynamiques qui forment l'étanchéité entre la soupape mobile de la valve et la chambre de valve qui contient la dose à expulser.

Pour des raisons diverses, notamment écologiques, des propulseurs de type CFC ont été dans une grande mesure remplacés par des propulseurs du type HFC-134a ou HFC-227, avec ou sans alcool. L'utilisation de tels propulseurs, notamment lorsqu'ils sont utilisés avec un ajout d'environ 20% en poids d'éthanol, augmente les contraintes sur les joints, de sorte que les matériaux classiques utilisés précédemment en conjonction avec les gaz CFC ne présentent plus les caractéristiques optimales.

D'autre part, les joints utilisés dans des dispositifs de distribution de produit fluide non pressurisés, et notamment dans les pompes, doivent également satisfaire plusieurs conditions et remplir un certain nombre d'exigences. Ainsi, ces joints doivent présenter une bonne tenue aux solutions, notamment aux solutions eau/éthanol, c'est-à-dire des solutions contenant de l'eau, de l'éthanol ou un mélange d'eau et d'éthanol. D'autre part, ces joints doivent fournir une bonne résistance à l'humidité et garantir une bonne tenue aux agents de conservation, tels que les ammonium quaternaires.

Le document US-5 290 539 divulgue des matériaux de joint utilisables avec du HFC-134a ou du HFC-227. Le document GB-2 323 597 divulgue également des matériaux de joint.

La présente invention a donc pour but de fournir des joints de valve ou de pompe qui remplissent les exigences susmentionnées.

La présente invention a donc pour but de fournir un joint de valve destiné à venir en contact avec un produit fluide et un propulseur du type HFA avec ou sans alcool, qui garantisse un bon niveau de propriétés mécaniques et/ou de faibles gonflements et/ou une bonne résistance à l'humidité.

La présente invention a aussi pour but de fournir un joint de pompe qui garantit une bonne tenue aux solutions eau/éthanol et/ou une bonne résistance à l'humidité et/ou une bonne tenue aux agents de conservation, tels que les ammonium quaternaires.

La présente invention a encore pour but de fournir des joints de valve ou de pompe qui sont simples et peu coûteux à fabriquer.

La présente invention a donc pour objet un dispositif de distribution de produit fluide sous pression comprenant une valve pourvue d'une soupape mobile, ladite valve étant montée sur un réservoir contenant le produit fluide et un propulseur avec ou sans alcool, le dispositif comportant au moins un joint de col entre la valve et le réservoir et un joint dynamique dans lequel coulisse ladite soupape, caractérisé en ce que le propulseur comprend un gaz du type HFC - 134a ou HFC - 227, et en ce qu 'au moins un desdits joints comprend un nitrile hydrogéné (HNBR).

Avantageusement, ledit joint comprend en outre un ou plusieurs autre(s) ingrédient(s) tels que des charges minérales et/ou des charges noir de carbone et/ou des agents de vulcanisation et/ou des colorants et/ou des agents de mise en oeuvre et/ou des plastifiants.

La présente invention a également pour objet un dispositif de distribution de produit fluide sous pression, comprenant une valve pourvue d'une soupape mobile, ladite valve étant montée sur un réservoir contenant le produit fluide et un propulseur avec ou sans alcool, le dispositif comportant au moins un joint de col entre la valve et le réservoir et un joint dynamique dans lequel coulisse ladite soupape, au moins un desdits joints étant réalisé selon la présente invention.

Le propulseur comprend un gaz du type HFC-134a ou HFC-227.

La présente invention a également pour objet un dispositif de distribution de produit fluide non pressurisé, comprenant une pompe montée sur un réservoir contenant le produit fluide et au moins un joint entre la pompe et le réservoir, ledit joint ou au moins un desdits joints étant réalisé selon la présente invention.

Selon une première variante, le joint comporte en tant que polymère de base essentiellement un élastomère nitrile hydrogéné (HNBR). Cet élastomère de nitrile hydrogéné présente la formule chimique générale suivante :

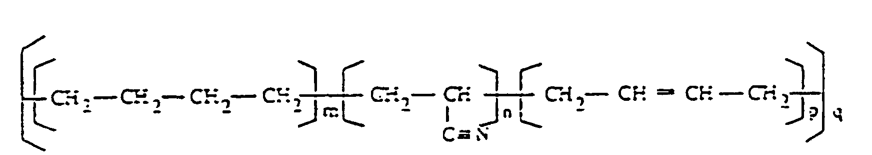

Ce produit est disponible sur le marché, notamment par la société BAYER ou la société NIPPON ZEON.

En tant que joint de valve, il s'avère qu'au contact d'un produit fluide du type HFC-134a ou HFC-227, avec ou sans alcool (par exemple de l'éthanol), il présente d'excellentes propriétés mécaniques, de sorte qu'il est particulièrement adapté à être utilisé en tant que joint dynamique. Bien entendu, il est également utilisable en tant que joint de col dans un tel dispositif aérosol pour réaliser l'étanchéité entre la valve et le réservoir contenant le produit et le propulseur.

Selon une deuxième variante, le joint peut être réalisé sous la forme d'un alliage comprenant du HNBR et du polyoctène éthylène (POE). L'ajout de polyoctène garantit notamment des propriétés de faible gonflement en contact avec des propulseurs du type HFC, avec ou sans alcool.

Des résultas particulièrement favorables ont notamment été obtenus avec un matériau de joint comprenant environ 20% en poids de HNBR et environ 80% en poids de POE. Dans cette composition, le joint est de plus particulièrement économique et facile à fabriquer.

Selon une troisième variante de réalisation, le composant élastomère du joint peut être un alliage de HNBR et de butyl (ou halobutyl). L'ajout de butyl ou d'halobutyl fournit des joints ayant une bonne résistance à l'humidité ainsi que des faibles gonflements dans des propulseurs du type HFC. avec ou sans alcool. Des résultats avantageux ont notamment été obtenus avec un matériau de joint comportant environ 60% en poids de HNBR et environ 40% en poids de butyl ou d'halobutyl.

Selon une quatrième variante, le composant élastomère du joint peut être un alliage de HNBR et d'éthylène propylène (EP) ou un alliage de HNBR et d'éthylène propylène diène (EPDM). Ce type d'alliage permet d'obtenir pour les joints de faibles gonflements, notamment avec des propulseurs du type HFC avec ou sans alcool, tout en maintenant un bon niveau de propriétés mécaniques. Des résultats favorables à un coût de fabrication raisonnables ont notamment été obtenus avec des joints comprenant environ 50% en poids ou plus de HNBR et environ 50% en poids ou moins de EP ou de EPDM.

Selon encore d'autres variantes, le composant élastomère peut également être un alliage de HNBR et de caoutchouc de polychloroprène (CR) ou un alliage de HNBR et de caoutchouc styrène butadiène (SBR). Ces deux types d'alliage permettent d'obtenir des joints ayant de bonnes propriétés mécaniques et présentant de faibles gonflements dans des propulseurs de type HFC, avec ou sans alcool.

Le HNBR est un composant élastomère qui est très avantageux en ce qu'il fournit de bonnes propriétés mécaniques. Il est envisageable de réaliser des joints comprenant un alliage de HNBR et de polyoctène éthylène (POE). Ce type de joint présente de bonnes propriétés mécaniques et de faibles gonflements en contact avec des propulseurs du type HFC, avec ou sans alcool.

D'autre part, il est également envisageable de réaliser des joints comportant un alliage de HNBR et de butyl ou d'halobutyl. Ce type de joint présente une bonne résistance à l'humidité ainsi que de faibles gonflements dans des propulseurs du type HFC, avec ou sans alcool.

Tout les matériaux de joints décrits ci-dessus peuvent en outre comprendre un ou plusieurs autre(s) ingrédients), généralement bien connu(s) dans le domaine des joints. En particulier, les formulations des joints peuvent comprendre des charges minérales ou des charges noir de carbone, des agents de vulcanisation, des colorants, des agents de mise en oeuvre ou des plastifiants.

Les joints de valve pour distributeurs aérosols selon l'invention peuvent donc être utilisés dans un grand nombre d'applications, leur formulation dépendant principalement des exigences mécaniques et d'étanchéité particulières ainsi que des produits et des propulseurs à mettre en contact avec lesdits joints.

Selon un autre aspect de l'invention, les joints de la présente invention sont également applicables aux dispositifs de distributeur de produit fluide non pressurisés comportant une pompe montée sur un réservoir. Dans ce cas, le ou les joints assurant l'étanchéité entre la pompe ou le réservoir peuvent être réalisés dans l'un des matériaux décrits ci-dessus, ce qui permet d'obtenir une bonne tenue aux solutions eau/éthanol, une bonne résistance à l'humidité ainsi qu'une bonne tenue aux conservateurs, notamment aux ammonium quaternaires. Ces propriétés sont particulièrement avantageuses dans les formulations de joint comportant du HNBR, seul ou en alliage.

La facilité de fabrication et le coût modéré sont également des aspects avantageux des joints de la présente invention.

Bien que des rapports de compositions particuliers ont été décrits ci-dessus en référence aux diverses variantes de formulation des joints, la présente invention n'est pas limitée à ces rapports, et la portée du brevet est définie par les revendications annexées.

## Revendications

1. Dispositif de distribution de produit fluide sous pression, comprenant une valve pourvue d'une soupape mobile, ladite valve étant montée sur un réservoir contenant le produit fluide et un propulseur avec ou sans alcool, le dispositif comportant au moins un joint de col entre la valve et le réservoir et un joint dynamique dans lequel coulisse ladite soupape, **caractérisé en ce que** le propulseur comprend un gaz du type HFC-134a ou HFC-227 et **en ce qu'**au moins un desdits joints comprend un nitrile hydrogéné (HNBR).

2. Dispositif selon la revendication 1, dans lequel ledit joint comprend un alliage de HNBR et de polyoctène éthylène (POE).

3. Dispositif selon la revendication 2, dans lequel le joint comprend environ 20% en poids de HNBR et environ 80% en poids de POE.

4. Dispositif selon la revendication 1, dans lequel ledit joint comprend un alliage de HNBR et de butyl ou d'halobutyl.

5. Dispositif selon la revendication 4, dans lequel ledit joint comprend environ 60% en poids de HNBR et environ 40% en poids de butyl ou d'halobutyl.

6. Dispositif selon la revendication 1, dans lequel ledit joint comprend un alliage de HNBR et d'éthylène propylène (EP) ou d'éthylène propylène diène (EPDM).

7. Dispositif selon la revendication 6, dans lequel ledit joint comprend environ 50% en poids ou plus de HNBR et environ 50% en poids ou moins de EP ou de EPDM.

8. Dispositif selon la revendication 1, dans lequel ledit joint comprend un alliage de HNBR et de caoutchouc polychloroprène (CR).

9. Dispositif selon la revendication 1, dans lequel ledit joint comprend un alliage de HNBR et de caoutchouc styrène butadiène (SBR).

10. Dispositif selon l'une quelconque des revendications précédentes, dans lequel ledit joint comprend en outre un ou plusieurs autre(s) ingrédient(s) tels que des charges minérales et/ou des charges noir de carbone et/ou des agents de vulcanisation et/ou des colorants et/ou des agents de mise en oeuvre et/ou des plastifiants.

## Patentansprüche

1. Abgabevorrichtung für ein unter Druck stehendes, fluidförmiges Produkt, die eine mit einem beweglichen Ventil versehene Ventileinrichtung umfasst, wobei die Ventileinrichtung auf einem Behälter montiert ist, der das fluidförmige Produkt und ein Treibmittel mit oder ohne Alkohol umfasst, wobei die Vorrichtung wenigstens eine Halsdichtung zwischen der Ventileinrichtung und dem Behälter und eine dynamische Dichtung umfasst, in der das Ventil gleitet, **dadurch gekennzeichnet, dass** das Treibmittel ein Gas vom Typ HFC-134a oder HFC-227 umfasst, und dass wenigstens eine der Dichtungen ein Nitrilhydrogen (HNBR) umfasst.

2. Vorrichtung nach Anspruch 1, bei der die Dichtung eine Mischung aus HNBR und Polyoctenethylen (POE) umfasst.

3. Vorrichtung nach Anspruch 2, bei der die Dichtung ungefähr 20 Gewichtsprozent HNBR und ungefähr 80 Gewichtsprozent POE umfasst.

4. Vorrichtung nach Anspruch 1, bei der die Dichtung eine Mischung aus HNBR und Butyl oder Halobutyl umfasst.

5. Vorrichtung nach Anspruch 4, bei der die Dichtung ungefähr 60 Gewichtsprozent HNBR und ungefähr 40 Gewichtsprozent Butyl oder Halobutyl umfasst.

6. Vorrichtung nach Anspruch 1, bei der die Dichtung eine Mischung aus HNBR und Ethylenpropylen (EP) oder Ethylenpropylendien (EPDM) umfasst.

7. Vorrichtung nach Anspruch 6, bei der die Dichtung ungefähr 50 Gewichtsprozent oder mehr HNBR und ungefähr 50 Gewichtsprozent oder weniger EP oder EPDM umfasst.

8. Vorrichtung nach Anspruch 1, bei der die Dichtung eine Mischung aus HNBR und Kautschukpolychloropren (CR) umfasst.

9. Vorrichtung nach Anspruch 1, bei der die Dichtung eine Mischung aus HNBR und Kautschukstyrenbutadiem (SBR) umfasst.

10. Vorrichtung nach einem der vorhergehenden Ansprüche, bei der die Dichtung weiterhin einen oder mehrere andere Bestandteile wie z. B. mineralische Zuschlagstoffe und/oder schwarze Kohlenstoff-Zuschlagstoffe und/oder Vulkanisiermittel und/oder Farbstoffe und/oder Verarbeitungsstoffe und/oder Plastifizierungsmittel umfasst.

## Claims

1. A pressurized fluid dispenser device comprising a valve provided with a moving valve member, said valve being mounted on a container containing both the fluid and also a propellant, with or without alcohol, the device having at least one neck gasket between the valve and the container, and a dynamic gasket through which said valve member slides, said dispenser device being **characterized in that** the propellant comprises a hydrofluorocarbon (HFC) gas of the HFC-134a type or of the HFC-227 type, and **in that** at least one of said gaskets comprises a hydrogenated nitrile butadiene rubber (HNBR).

2. A device according to claim 1, in which said gasket comprises an alloy of HNBR and of octene-ethylene copolymer (OEC).

3. A device according to claim 2, in which the gasket comprises about 20% by weight of HNBR and about 80% by weight of OEC.

4. A device according to claim 1, in which said gasket comprises an alloy of HNBR and of butyl or of halobutyl rubber.

5. A device according to claim 4, in which said gasket comprises about 60% by weight of HNBR and about 40% by weight of butyl or of halobutyl rubber.

6. A device according to claim 1, in which said gasket comprises an alloy of HNBR and of ethylene propylene (EP) or of ethylene-propylene-diene-monomer (EPDM).

7. A device according to claim 6, in which said gasket comprises about 50% by weight or more of HNBR and a about 50% by weight or less of EP or of EPDM.

8. A device according to claim 1, in which said gasket comprises an alloy of HNBR and of poly-chloroprene rubber (CR).

9. A device according to claim 1, in which said gasket comprises an alloy of HNBR and of styrene butadiene rubber (SBR).

10. A device according to any preceding claim, in which said gasket further comprises one or more other ingredient(s) such as inorganic fillers and/or carbon black fillers and/or vulcanization agents and/or pigments and/or processing agents and/or plasticizers.
